# EUROPEAN PATENT APPLICATION

(11) **EP 2 639 629 A1**
(43) Date of publication of application: **18.09.2013**
(21) Application number: 11840581.0
(22) Date of filing: 21.10.2011
(51) Int. Cl.: G02F 1/03, H04B 10/04, H04B 10/06, H04B 10/142, H04B 10/152

(54) **OPTICAL PHASE MODULATION CIRCUIT AND METHOD OF OPTICAL PHASE MODULATION**

(30) Priority: 10.11.2010 JP 2010251488
(71) Applicant: NEC Corporation, Tokyo 108-8001 (JP)
(72) Inventor: NOGUCHI, Hidemi, Tokyo 108-8001 (JP)
(74) Representative: Vossius & Partner
(86) International application number: PCT/JP2011/005903
(87) International publication number: WO 2012/063413

(57) **Abstract**

To provide an optical phase modulation circuit and an optical phase modulation method capable of achieving a high-speed operation without increasing the power consumption. An optical phase modulation circuit according to the present invention includes an optical modulation unit 50 that includes a plurality of division electrodes 12 to 15 connected in tandem and generates a modulation signal by summing up optical signals modulated by using respective division electrodes, drive circuits 8 to 11 that drive the plurality of division electrodes, and a modulation timing control unit 60 that controls timings at which the optical signals are modulated in the plurality of division electrodes 12 to 15, by controlling an operation timing of the drive circuits 8 to 11.

## Description

### Technical Field

The present invention relates to an optical phase modulation circuit and an optical phase modulation method, in particular to an optical phase modulation circuit used in coherent light communication and an optical phase modulation method used in that optical phase modulation circuit.

### Background Art

As the demand for broadband multimedia communication such as the Internet and video image distributions has increased explosively, the introduction of high-density multiple-wavelength optical fiber communication systems having a larger capacity and higher reliability for a longer distance is in progress in trunk-line and metro networks. Further, even in subscriber's networks, the optical fiber access service is becoming widespread rapidly. In such communication systems using optical fibers, it is important to reduce the cost for installing optical fibers, which serve as optical transmission paths, and increase the transmission band use efficiency per optical fiber. As a result, the wavelength division multiplexing technique, in which signal lights having different wavelengths are multiplexed and transmitted, has been widely used.

Further, for the increase in transmission capacity per wavelength channel, it has been attempted to increase the capacity by improving the transmission speed of the binary optical intensity modulation scheme, which has been commonly used in the past. However, in the case of the high-speed transmission such as 40 Gbps and 100 Gbps, the phase modulation scheme using the coherent light communication technique is becoming the mainstream instead of the ordinary binary optical intensity modulation scheme in recent years in consideration of the tolerance to the wavelength dispersion and/or the polarization mode dispersion of optical fibers.

This phase modulation scheme is a modulation scheme in which the phase of an optical signal is changed according to a signal. For example, as an ordinary modulator having a transmission rate equal to or greater than 40 Gbps, there is a phase modulator using an optical waveguide made of ferroelectric crystal such as LiNbO3 (hereinafter called "LN modulator"). The LN modulator performs a phase modulation by using the change of refractivity caused by the primary electrooptic effect that occurs when an electric field is applied to an electrode disposed on the optical waveguide.

Examples of factors that restrict the modulation band of the phase modulator in this process include the following factor. In the case of the LN modulator, the refractivity is relatively small. Therefore, in the LN modulator, the component length of the modulator is adjusted to a length in the order of several millimeters to several centimeters in order to obtain a required phase variation amount. However, since the speed at which the signal (microwave) for driving the modulator propagates through the electrode attached to the component of the modulator is different from the speed at which the optical signal propagates through the optical waveguide, the electric field generated by the drive signal does not effectively work on the optical signal and the modulation band is thereby restricted.

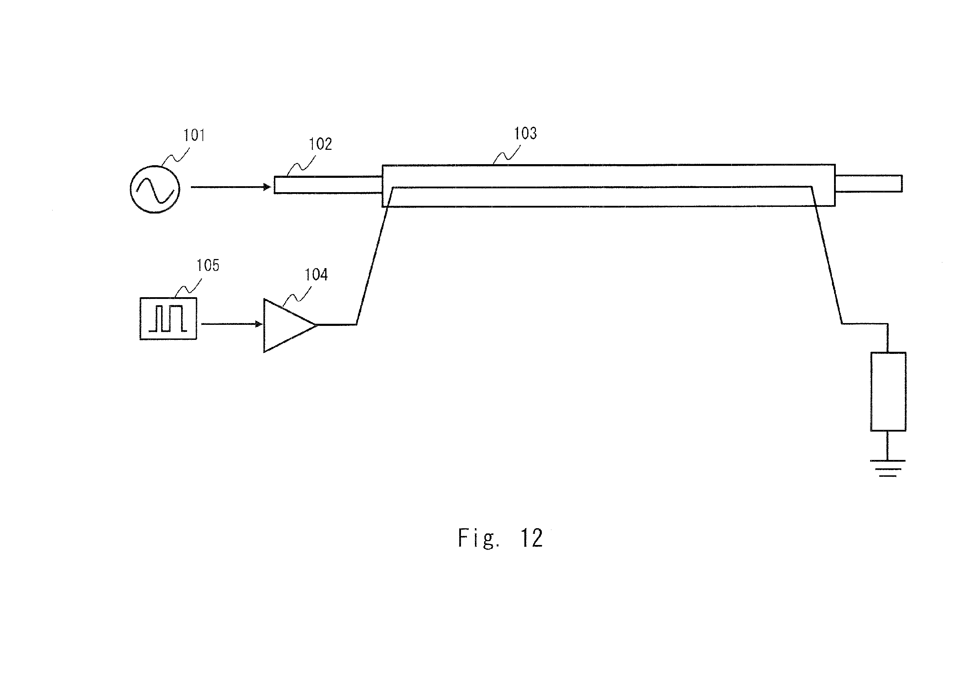

Therefore, the modulator has a progressive wave type electrode structure in which the propagating direction of the drive signal is conformed to that of the optical signal, so that it is possible to increase the modulation frequency band by making the transmission speeds of the microwave and the light equal to each other within the component. Fig. 12 shows an example of a LiNbO3 phase modulator using a progressive wave type electrode. In the LiNbO3 phase modulator shown in Fig. 12, an optical signal output from a CW optical signal source 101 is output through an optical waveguide 102. Further, a progressive wave electrode 103 is controlled by using a drive circuit and thereby modulates the optical signal. Further, the drive circuit 104 is controlled by using an electric signal output from a signal source 105.

However, in general, a LiNbO3 phase modulator using a progressive wave type electrode requires a voltage equal to or greater than 5V as the drive voltage for driving the modulator. As a result, the power consumption of the drive circuit of the LiNbO3 phase modulator using a progressive wave type electrode is large. In addition, it is very difficult to realize a wide-band drive circuit that can operate at high speed with a large output amplitude of 5V or larger in the first place. Note that it is possible to prevent the increase in the drive voltage by increasing the component length of the modulator even further. However, on the other hand, it becomes very difficult to make the transmission speed of the microwave, which serves as the modulator drive signal, and that of the light equal to each other as described above, and thus restricting the modulation band. Further, the signal amplitude of the drive signal is attenuated as the drive signal propagates through the progressive wave electrode. Therefore, there is a limit on the component length of the modulator.

That is, there is a trade-off relation between the increase in the modulation band of the phase modulator and the decrease in the drive voltage. As described above, it is necessary to increase the modulation band of the optical phase modulator in order to realize a high-speed phase modulation. Further, in general, an electric circuit that drives a modulator has such a tendency that the band decreases as the signal output increases. Therefore, in phase modulators, a low drive voltage and a wide-band operation are desired.

As a method for solving the problem like this, Patent literatures 1 and 2 disclose an optical phase modulation circuit or an optical transmission apparatus in which: a plurality of optical modulators are connected in tandem; the output timings of electric signals for driving respective modulators are delayed; and the total phase change obtained by summing up phase changes in respective modulators is controlled.

### Citation List

### Patent Literature

Patent literature 1: Japanese Unexamined Patent Application Publication No. 2007-158415
Patent literature 2: Japanese Unexamined Patent Application Publication No. 05-257102

### Summary of Invention

### Technical Problem

However, even when the modulation band is expanded by connecting a plurality of optical modulators in tandem and the low drive voltage operation is performed, the rising/falling edges of the drive waveform is blunted when the modulator is driven at a speed of 100 Gbps or higher. Therefore, it is necessary to make some contrivance such as decreasing the output impedance of the drive circuit in order to increase the speed even further. As a result, the electric power is increased. Alternatively, it may be possible to increase the rising/falling speed of the drive waveform by using a peaking technique using an inductor, which is often used to increase the speed in electric circuits. However, it requires an analog adjustment. In addition, there is a problem that once it is built into the drive circuit, it is impossible to cope with the characteristic variations when the characteristic is changed due to the environmental variations of the temperature, the power supply, and the like. Further, there is a waveform peaking technique using an FIR filter by an electric circuit. Although it is possible to perform high-precision control against the temperature/power-supply variations by using this technique, the electric circuit becomes larger in scale, and thus leading to the increase in the electric power. In addition, since the load on the electric circuit itself becomes larger, it requires larger electric power than necessary for the increase in the circuit scale in order to compensate for the increased load. As described above, it is desired to make it possible to control the rising/falling of the waveform even against the temperature/power-supply variations and thereby realize a modulation method for realizing a high-speed optical modulation without increasing the additional electric power.

An object of the present invention is to provide an optical phase modulation circuit and an optical phase modulation method capable of achieving a high-speed operation without increasing the power consumption.

### Solution to Problem

An optical phase modulation circuit according to a first aspect of the present invention includes: an optical modulation unit that includes a plurality of division electrodes connected in tandem and generates a modulation signal by summing up optical signals modulated by using respective division electrodes; a drive unit that drives the plurality of division electrodes; and a modulation timing control unit that controls timings at which the optical signals are modulated in the plurality of division electrodes, by controlling an operation timing of the drive unit.

An optical phase modulation method according to a second aspect of the present invention includes: a step of dividing a signal output from a signal source into a plurality of branch signals; a step of controlling an output timing of at least one branch signal among the plurality of branch signals; and a step of driving a plurality of division electrodes connected in tandem by using a plurality of branch signals including the branch signal whose output timing is controlled.

### Advantageous Effects of Invention

According to the present invention, it is possible to provide an optical phase modulation circuit and an optical phase modulation method capable of achieving a high-speed operation without increasing the power consumption.

### Brief Description of Drawings

Fig. 1 is a configuration diagram of an optical phase modulation circuit according to a first exemplary embodiment;
Fig. 2 is a configuration diagram of an optical phase modulation circuit according to a first exemplary embodiment;
Fig. 3 is a configuration diagram of a drive circuit according to a first exemplary embodiment;
Fig. 4 is a timing chart at the time when the phase of an optical signal is modulated according to a first exemplary embodiment;
Fig. 5 is a waveform chart of an optical signal after the phase is modulated according to a first exemplary embodiment;
Fig. 6 is a waveform chart of an optical signal to which an analog peaking characteristic is given according to a first exemplary embodiment;
Fig. 7 is a waveform chart of an optical signal for which analog peaking characteristic and delay control is performed according to a first exemplary embodiment;
Fig. 8 is a configuration diagram of an optical phase modulation circuit according to a second exemplary embodiment;
Fig. 9 is a configuration diagram of an optical phase modulation circuit according to a third exemplary embodiment;
Fig. 10 is a timing chart at the time when the phase of an optical signal is modulated in Patent literature 2;
Fig. 11 is a waveform chart of an optical signal after the phase is modulated in Patent literature 2; and
Fig. 12 is a configuration diagram of a LiNbO3 phase modulator using an ordinary progressive wave type electrode.

### Description of Embodiments

### [First exemplary embodiment]

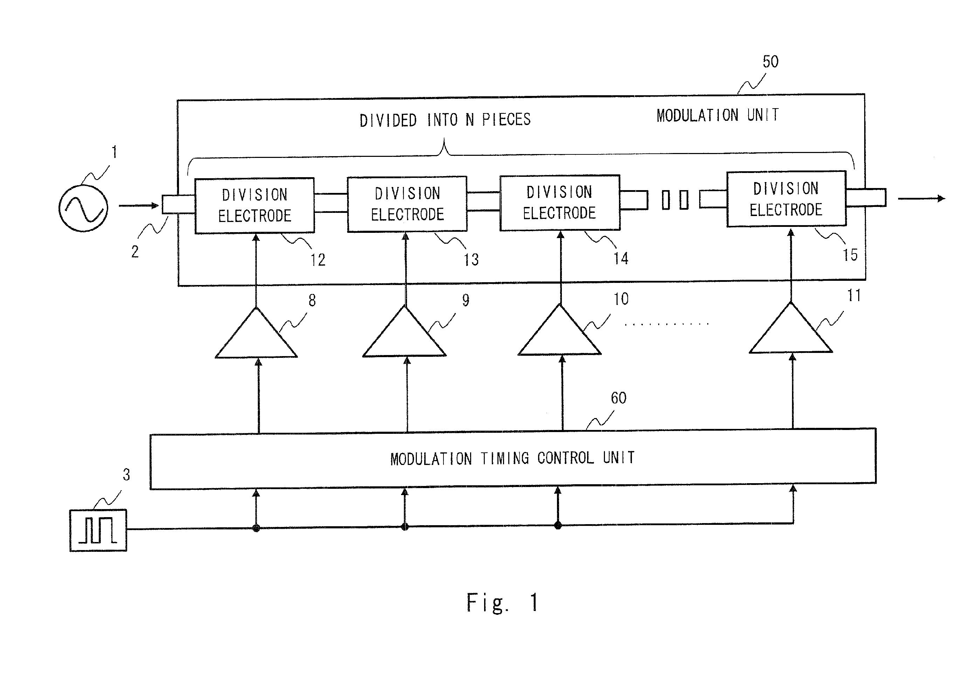

Exemplary embodiments according to the present invention are explained hereinafter with reference to the drawings. A configuration example of an optical phase modulation circuit according to a first exemplary embodiment of the present invention is explained with reference to Fig. 1. The optical phase modulation circuit includes an optical signal source 1, a signal source 3, drive circuits 8 to 11, and a modulation timing control unit 60. Further, a modulation unit 50 includes division electrodes 12 to 15 and an optical waveguide 2.

The modulation unit 50 modulates the phase of an optical signal output from the optical signal source 1 to the optical waveguide 2. The modulation unit 50 outputs an optical signal whose phase has been modulated. The modulation unit 50 modulates the phase of an optical signal by using the division electrodes 12 to 15. The division electrodes 12 to 15 are disposed in the optical waveguide 2. Further, the division electrodes 12 to 15 are connected in tandem. The phase of the optical signal that passes through the optical waveguide 2 is modulated by the change of the refractivity caused by the primary electrooptic effect that occurs when an electric field is applied to the division electrodes 12 to 15. The phase of the optical signal that passes through the optical waveguide 2 is modulated at each of the division electrodes, and the phases of the optical signal that are modulated by the respective division electrodes are summed up. The modulation unit 50 outputs an optical signal whose phases are summed up.

In this manner, the one modulation unit 50 includes a plurality of division electrodes and generates an optical signal that is obtained by summing up the phases of an optical signal that are modulated at the respective division electrodes.

The drive circuits 8 to 11 drive the division electrodes 12 to 15. The drive circuits 8 to 11 generate drive signals and output the generated drive signals to the division electrodes 12 to 15. The division electrodes 12 to 15 modulate the phase of the optical signal at timings at which the drive signals are received. In this figure, the division electrodes 12 to 15 correspond to the drive circuits 8 to 11 in a one-to-one relation. However, for example, a plurality of division electrodes may be controlled by one drive circuit.

The modulation timing control unit 60 controls the timings at which the optical signal is modulated at the plurality of division electrodes, by controlling the operation timings of the drive circuits 8 to 11.

As explained above, one modulation unit includes a plurality of division electrodes connected in tandem in the optical phase modulation circuit according to Fig. 1. Therefore, it is possible to reduce the component length of each division electrode and thereby to drive each division electrode at a low voltage. Further, since one modulation unit includes a plurality of division electrodes, it is possible to adjust the modulation band to various values. That is, since the modulation timing control unit 60 controls the operation timing of each drive circuit, it is possible to change the phase modulation band of the optical signal. Further, all the division electrodes, which are divided into N pieces, do not necessarily have to be driven in order to obtain a desired phase modulation band. That is, only the necessary number of division electrodes according to the desired phase modulation band may be operated. As a result, it is possible to drive the modulation unit having a plurality of division electrodes at a lower voltage in comparison to a modulation unit having one electrode.

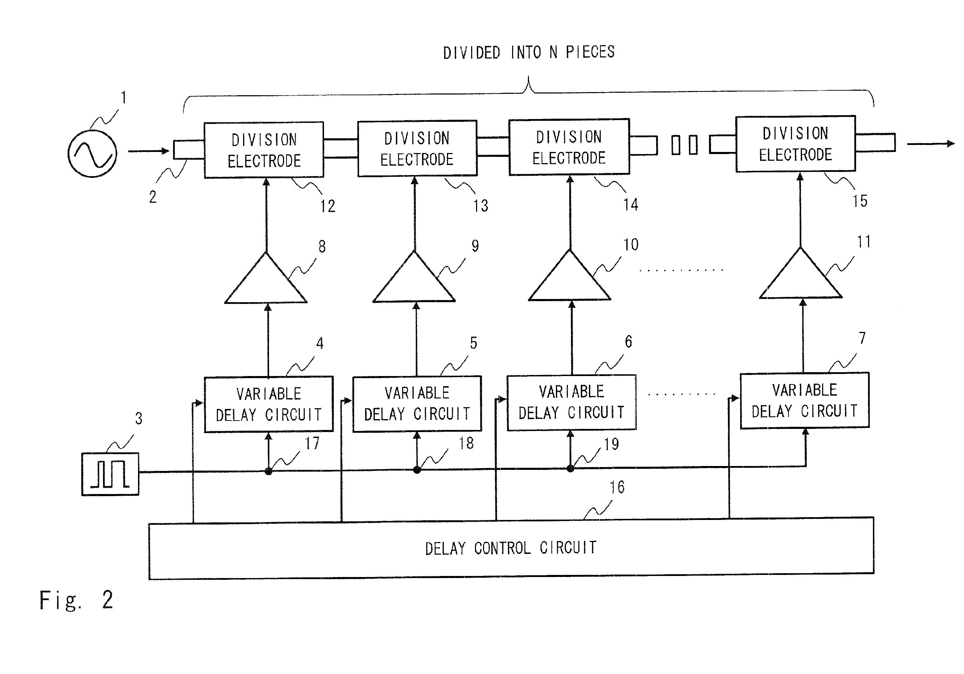

Next, a detailed configuration example of the optical phase modulation circuit according to the first exemplary embodiment of the present invention is explained with reference to Fig. 2. The optical phase modulation circuit includes an optical signal source 1, an optical waveguide 2, a signal source 3, variable delay circuits 4 to 7, drive circuits 8 to 11, division electrodes 12 to 15, a delay control circuit 16, and branch sections 17 to 19.

The optical signal source 1 generates an optical signal and outputs the generated optical signal to the optical waveguide 2. The optical waveguide 2 is made of, for example, ferroelectric crystal such as LiNbO3. Further, in the optical waveguide 2, the division electrodes 12 to 15 are disposed along the traveling direction of the optical signal. The division electrodes 12 to 15 composed of N division electrodes are connected in tandem. In this figure, a plurality of division electrodes are disposed between the division electrode 14 and the division electrode 15. The optical waveguide 2 performs a phase modulation(s) by using the change of refractivity caused by the primary electrooptic effect that occurs when an electric field(s) is applied to the division electrodes 12 to 15.

The signal source 3 outputs an electric signal generated based on transmission data. Further, the electric signal output from the signal source 3 is divided at the branch sections 17 to 19. It is assumed that there are N-1 branch sections in this figure, and the electric signal output from the signal source 3 is thereby divided into N electric signals. The electric signals, which are divided into N electric signals, are output to the respective variable delay circuits 4 to 7.

The variable delay circuit 4 gives a variable delay amount to a received electric signal and outputs the electric signal to the drive circuit 8. Similarly, the variable delay circuits 5 to 7 give delays to received electric signals and output the electric signals to the drive circuits 9 to 11. The variable delay amounts given by the variable delay circuits 4 to 7 are controlled by the delay control circuit 16.

The drive circuit 8 generates a drive signal by using the electric signal received from the variable delay circuit 4 and outputs the generated drive signal to the division electrode 12. Similarly, the drive circuits 9 to 11 generate drive signals by using the electric signals received from the variable delay circuits 5 to 7 and output the generated drive signals to the division electrodes 13 to 15. The division electrodes 12 to 15 are driven by the drive signals received from the drive circuit 8. That is, the division electrodes 12 to 15 apply electric fields at timings at which the drive signals are received, and thereby modulate the phase of the optical signal propagating along the optical waveguide 2.

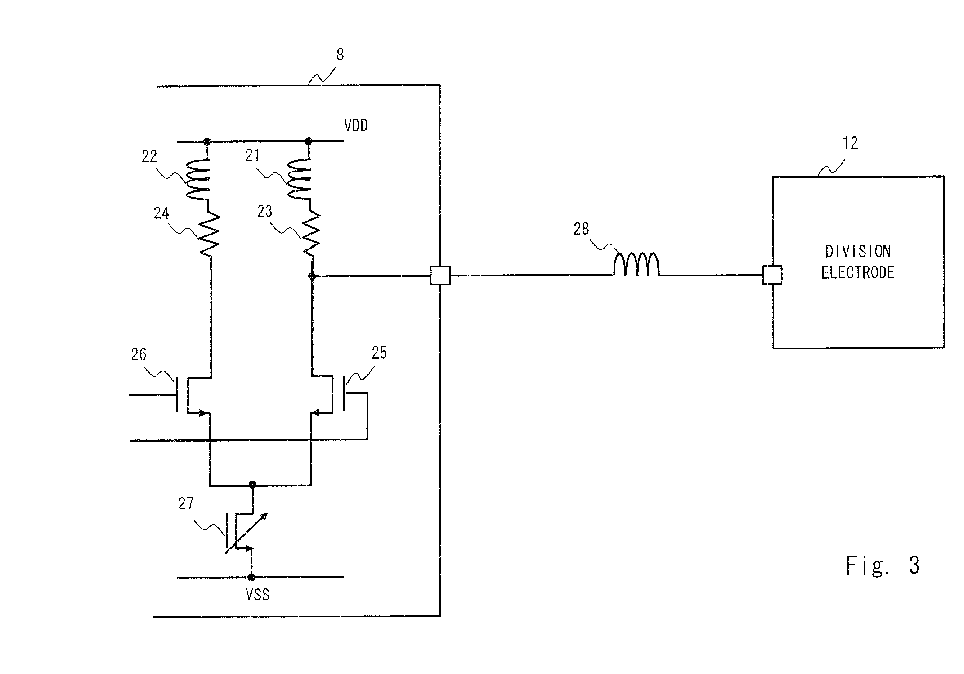

Further, the drive circuit 8 gives an analog peaking characteristic to the optical signal. By giving the analog peaking characteristic to the optical signal, it is possible to make the rising and falling timings of the optical signal steeper without causing any additional electric power increase. By making the rising and falling timings of the signal steeper, it is possible to improve the operating speed. A specific configuration example of the drive circuit 8 is explained hereinafter with reference to Fig. 3.

Shunt peaking inductors 21 and 22 are connected to a power supply electrode VDD. Further, the shunt peaking inductor 21, and a resistor 23, and a transistor 25 are connected in series. Similarly, the shunt peaking inductor 22, and a resistor 24, and a transistor 26 are connected in series. The transistors 25 and 26 are connected to a variable capacitor 27 connected to a ground electrode VSS. A series peaking inductor 28 is connected to the division electrode 12 and to the contact point between the register 23 and the transistor 25.

The series peaking inductor 28 may be formed, for example, by using a bonding wire or the like that is used to mount the drive circuit 8 and the division electrode 12. Further, the shunt peaking inductors 21 and 22 may be formed as spiral inductors within the drive circuit 8.

Referring to Fig. 2 again, the division electrodes 12 to 15 are connected in tandem, and one modulation unit includes N division electrodes in this figure. By dividing an electrode disposed within one modulation unit into N pieces and driving them by using a drive circuit for each of the divided electrodes as described above, it is possible to drive the electrodes at a lower voltage in comparison to the case where one long electrode is driven.

Next, a modulation operation of an optical phase modulation circuit is explained. Firstly, an electric signal output from the signal source 3, which serves as an input signal, is divided into N electric signals through N-1 branch sections 17 to 19. The divided N electric signals are delayed respectively by N variable delay circuits 4 to 7 each of which is capable of giving an arbitrary delay. The N electric signals, to which the delays are given, are output to N drive circuits 8 to 11 respectively. The N drive circuits 8 to 11 give an analog peaking characteristic to the received electric signals and output the drive signals to N division electrodes 12 to 15 disposed along the optical waveguide 2. The division electrodes 12 to 15 operate according to the timings at which the drive signals are received.

Meanwhile, an optical signal launched from the optical signal source 1, which is not modulated, is successively phase-modulated by the division electrodes 12 to 15 as the optical signal passes through the respective division electrodes, and thereby adjusted so that the total phase change becomes a desired phase change amount.

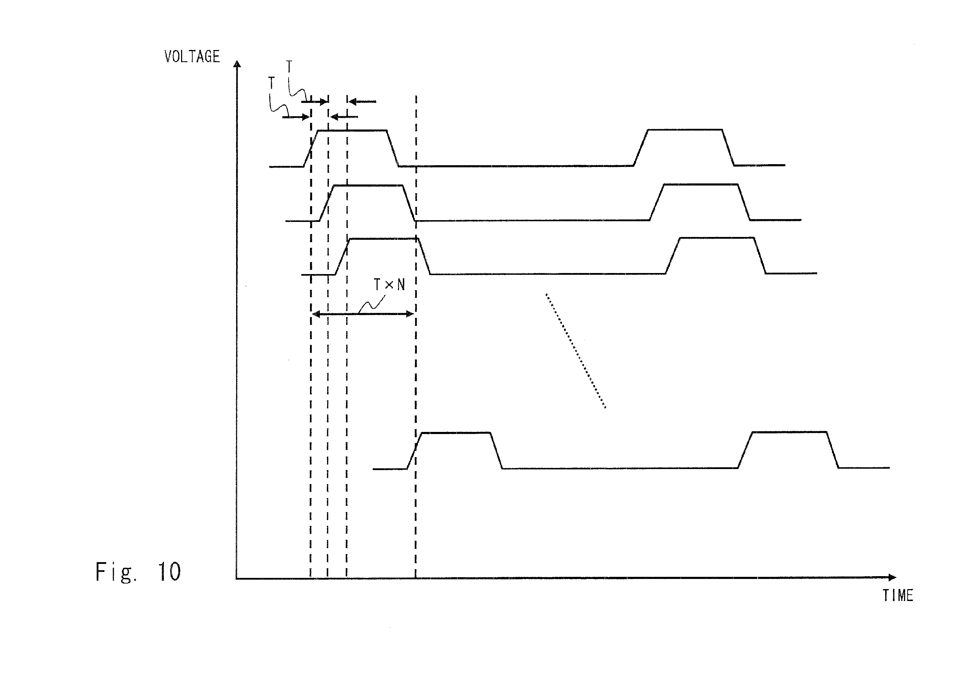

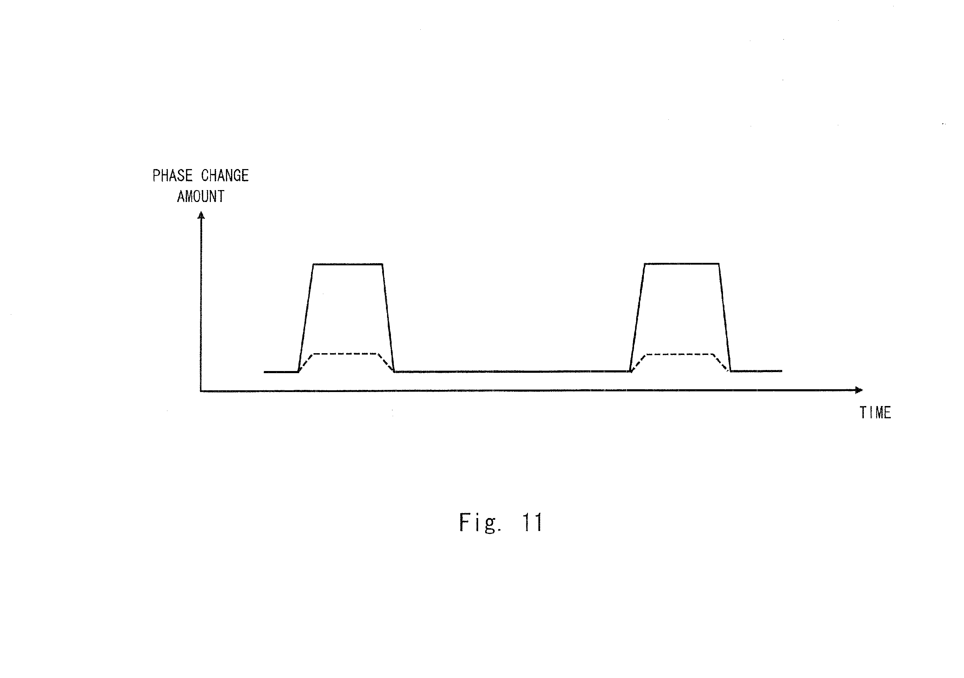

Note that when the light passes though the optical waveguide, a propagation delay occurs in the optical signal. Therefore, to compensate the propagation delay like this, a delay is given to a drive signal for driving a division electrode according to the propagation delay of the optical signal in the optical phase modulation circuit disclosed in Patent literature 2. By giving a delay to a drive signal, it is possible to conform the output time of the drive signal to the passage time of the optical signal. In this way, the propagation delay of the light is compensated by generating a pseudo-progressive wave of the drive signal. Figs. 10 and 11 show a timing chart and optical phase modulation waveforms of the optical phase modulation circuit disclosed in Patent literature 2. As shown in Fig. 10, a uniform delay amount T is given to a signal waveform for driving each division electrode. This delay amount T is equal to the propagation delay of the light. In this way, as shown in Fig. 11, the final optical phase modulation waveform appears with such a shape that all the drive signal waveforms are neatly added without any timing deviation.

In contrast to this, the present invention is characterized in that, unlike the timing chart shown in Fig. 10, the rising and falling timings of the optical signal are controlled by actively shifting the timing of a drive signal for each division electrode with respect to the propagation delay of the light on purpose.

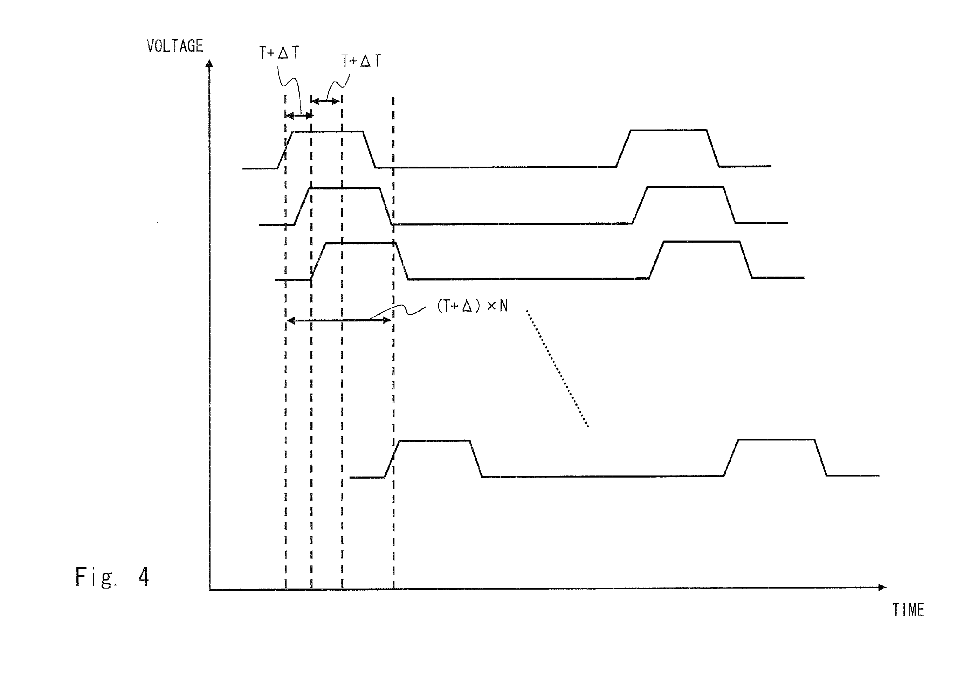

For example, Fig. 4 shows a timing chart and optical phase modulation waveforms in a case where each of the timings of drive signals supplied to respective division electrodes is delayed excessively by additional amount ΔT with respect to the propagation delay T of the light. The delay control circuit 16 determines a delay amount for excessively delaying the timing with respect to the propagation delay T of the light and notifies the determined delay amount to the variable delay circuits 4 to 7.

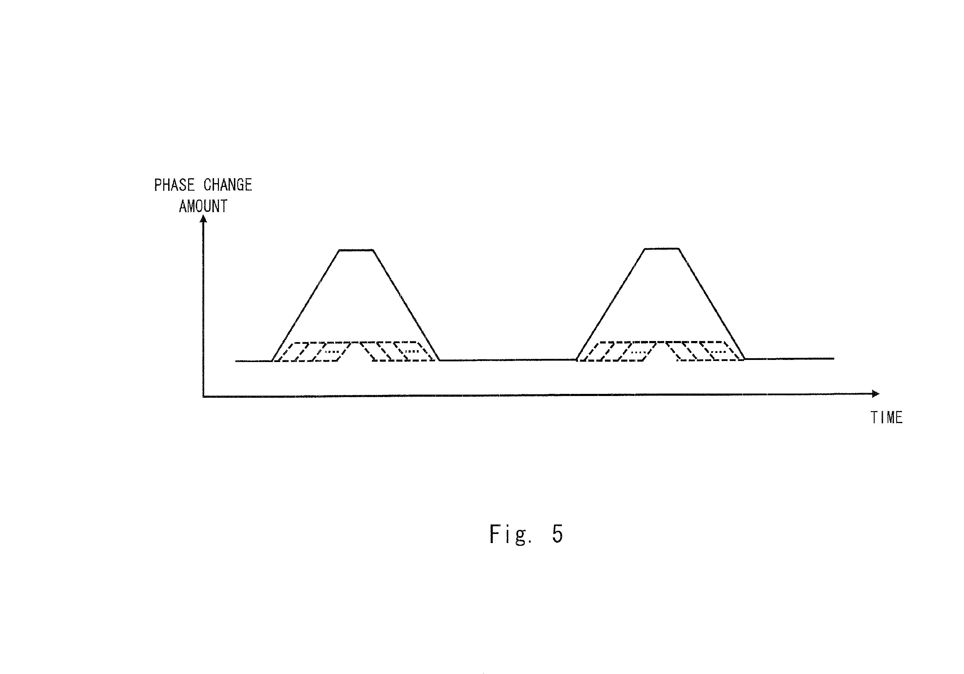

Further, Fig. 5 shows an optical phase modulation waveform in a case where each division electrode is operated by a drive signal that is delayed by an amount T+ΔT. The solid line represents an optical signal that is obtained by summing up optical signals modulated at respective division electrodes. The broken lines represent optical signals modulated at respective division electrodes. As shown in this figure, it can be seen that the rising period and the falling period of the optical signal are wider in comparison to the case shown in Fig. 11 in which the pseudo-electric progressive wave is exactly conformed to the propagation delay T of the light. Note that it is possible to control the rising and falling times and the degree of the bluntness of the waveform by arbitrarily changing the amount ΔT. Further, as for the amount ΔT, the same delay amount may be given to each of all the electrodes, or mutually-different arbitrary delay amounts may be given to the electrodes. There is no particular restriction on the combination of the delay amounts.

As described above, by adjusting the timing of a drive circuit of an optical modulator, it is possible to realize an optical modulator capable of adjusting the rising and falling timings of an optical signal without increasing the electric power of the drive circuit.

Further, the following advantageous effect can be obtained by adjusting the rising and falling timings of the optical modulation waveform and thereby blunting the optical modulation waveform. The drive circuits 8 to 11 shown in Fig. 2 control the division electrodes 12 to 15 so that an analog peaking characteristic is given to the optical signal. In this case, the rising and falling timings of the optical signal become steeper. However, because the rising and falling timings of the optical signal become steeper, disturbances in waveform called "overshoot" or "undershoot" occur. Therefore, it is possible to blunt the optical signal by adjusting the operation timings of the drive circuits 8 to 11 by using the variable delay circuits 4 to 7 and thereby adjusting the rising/falling timings of the optical modulation waveform, and thereby to suppress the disturbances in waveform due to the "overshoot" or "undershoot".

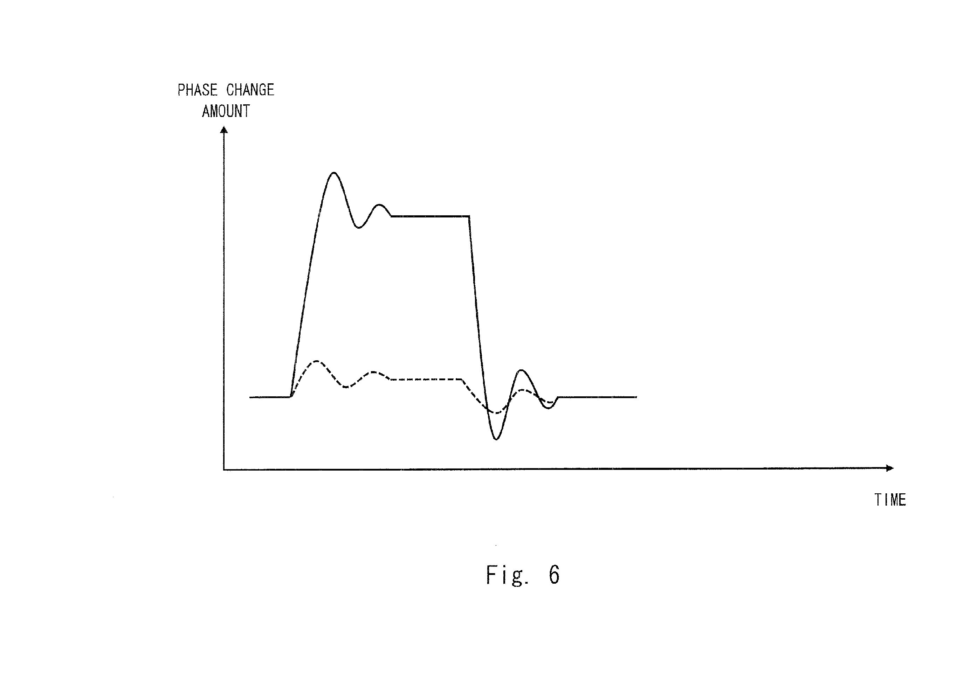

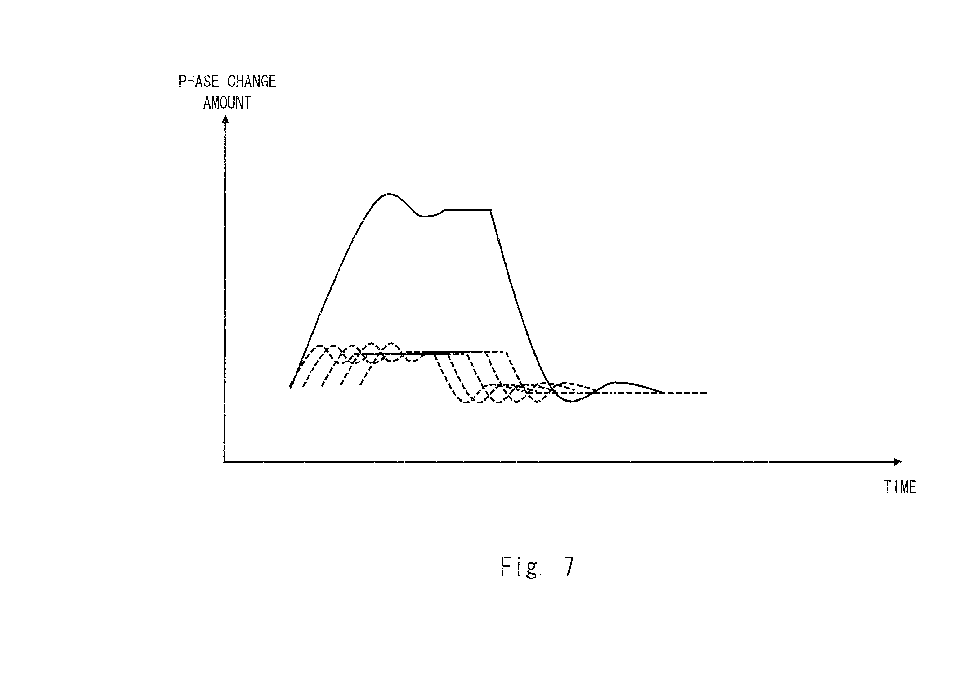

A disturbance in a waveform due to an overshoot or an undershoot is explained with reference to Figs. 6 and 7. The solid line represents an optical signal that is obtained by summing up optical signals modulated at respective division electrodes. The broken lines represent optical signals modulated at respective division electrodes. Fig. 6 shows an example in which although an analog peaking characteristic is given to the optical signal by using the drive circuits 8 to 11, the delay control circuit 16 performs control so that the delays of the drive signals are exactly conformed to the propagation delay T of the optical signal. In this case, as shown in Fig. 6, since the drive signal waveforms are added without any deviation, the effect of the overshoot and the undershoot at the rising and falling timings of the optical signal becomes larger.

In contrast to this, Fig. 7 shows an example in which an analog peaking characteristic is given to the optical signal by using the drive circuits 8 to 11, and the delay control circuit 16 controls the delays of the drive signals so that the drive signals are further delayed by an additional amount ΔT with respect to the propagation delay T of the optical signal. In this case, as shown in Fig. 7, although the rising and falling timings of the optical signal are blunted since the drive signal waveforms are added in a state where they are deviated from each other, the effect of the overshoot and the undershoot at the rising/falling timings is reduced.

By combining the drive circuits 8 to 11 that gives an analog peaking characteristic with the delay control circuit 16 that performs control so that the drive signals are further delayed by an additional amount ΔT with respect to the propagation delay T of the optical signal, it is possible to make the rising and falling timings of the optical signal steeper and reduce the effect of the overshoot and the undershoot.

Further, in a circuit that gives an analog peaking characteristic by using an inductor, once the peaking characteristic is built into the circuit, it is impossible to cope with the characteristic change when the characteristic is changed due to temperature variations, power supply voltage variations, or the like. Therefore, it is possible to obtain a neat waveform having no peaking such as an overshoot and an undershoot by controlling the delay amount by using the delay control circuit 16 and thereby blunting the rising and falling timings.

### [Second exemplary embodiment]

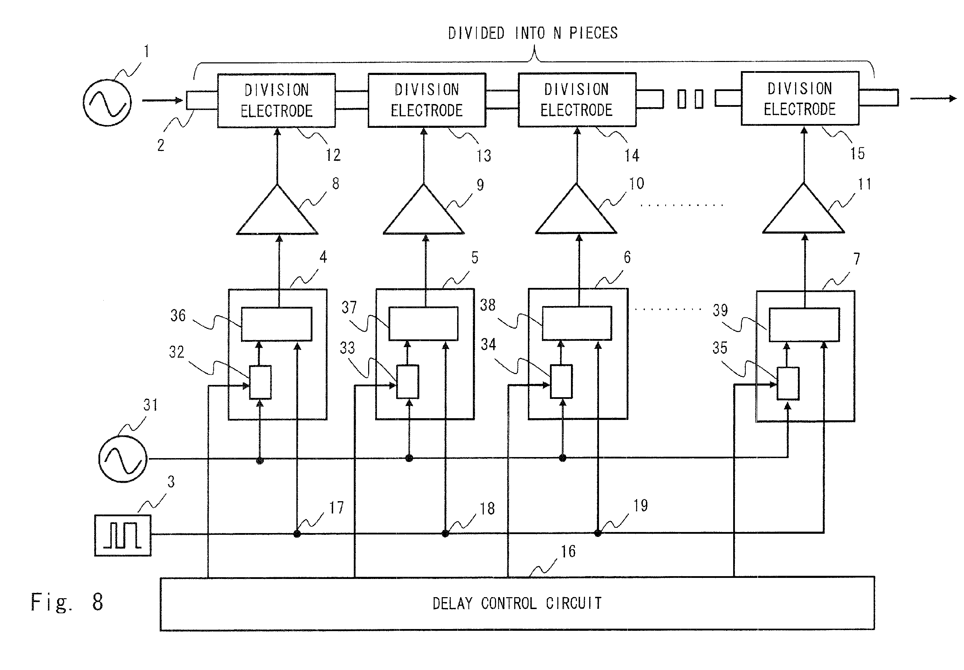

Next, a configuration example of an optical phase modulation circuit according to a second exemplary embodiment of the present invention is explained with reference to Fig. 8. The optical phase modulation circuit shown in Fig. 8 includes a clock signal source 31, in addition to the components of the optical phase modulation circuit shown in Fig. 2. Further, the variable delay circuit 4 is composed of a variable phase shifter 32 and a D-flip-flop circuit 36. Similarly, the variable delay circuits 5 to 7 are composed of variable phase shifters 33 to 35 and D-flip-flop circuits 37 to 39. The other configuration is similar to that of the optical phase modulation circuit shown in Fig. 1, and therefore its detailed explanation is omitted.

An operation of the variable delay circuits 4 to 7 is explained hereinafter. The clock signal source 31 outputs a clock signal to the variable phase shifters 32 to 35. Further, the delay control circuit 16 outputs a control signal whose delay amount is adjusted to the variable phase shifter 32 and thereby changes the phase of the clock signal output to the variable phase shifters 32 to 35. In this way, the variable phase shifters 32 to 35 can delay the clock signal output from the clock signal source 31 and output delayed clock signals to the D-flip-flop circuits 36 to 39.

Further, the signal source 3 outputs an electric signal(s) to the D-flip-flop circuits 36 to 39. The D-flip-flop circuits 36 to 39 output the electric signals output from the signal source 3, to the drive circuits 8 to 11 according to the timings of the clock signals output from the variable phase shifters 32 to 35.

In this manner, by delaying the timing of the clock signal output to the D-flip-flop circuit 36 in the variable phase shifter 32, the timing of the electric signal output from the variable delay circuit 4 to the drive circuit 8 is also delayed. That is, by controlling the delay amount in the variable phase shifter 32, it is possible to control the timing of the drive signal output from the drive circuit 8 to the division electrode 12. The variable delay circuits 5 to 7 operate in a similar manner.

### [Third exemplary embodiment]

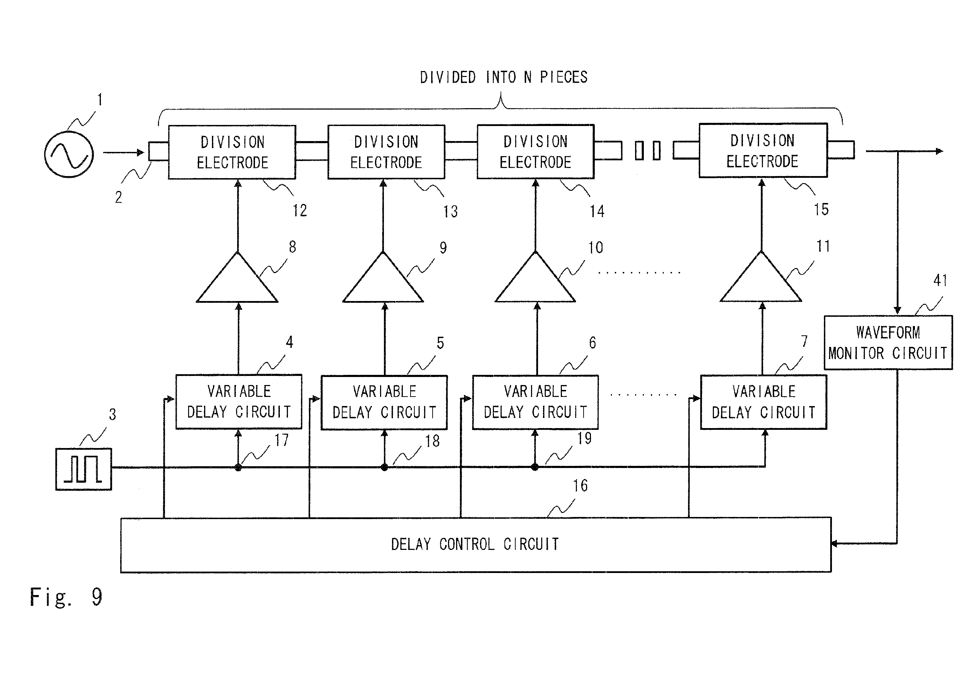

Next, a configuration example of an optical phase modulation circuit according to a third exemplary embodiment of the present invention is explained with reference to Fig. 9. The optical phase modulation circuit shown in Fig. 9 includes a waveform monitoring circuit 41, in addition to the components of the optical phase modulation circuit shown in Fig. 2. Note that the waveform monitoring circuit 41 may be also incorporated in the optical phase modulation circuit shown in Fig. 8. The other configuration is similar to that shown in Fig. 2, and therefore its detailed explanation is omitted.

The waveform monitoring circuit 41 monitors the waveform of an optical signal output from the optical waveguide 2 and outputs a monitoring result to the delay control circuit 16. There is a possibility that the waveform of the optical signal output from the optical waveguide 2 is disturbed due to temperature variations, power supply variations, variations resulting from process variations, or the like. For example, there is a case where the effect of the overshoot or the undershoot at the rising or falling timing of the optical signal becomes larger due to the effect of temperature variations or the like. In the case like this, the delay control circuit 16 can blunt the rising or falling timing by increasing the delay amount of the electric signal output to the drive circuit 8, and thereby to reduce the effect of the overshoot or the undershoot at the rising or falling timing.

Further, when the rising and falling times of the optical signal are excessively long and the waveform is thereby blunted, the delay control circuit 16 can make the rising or falling timing of the optical signal steeper by reducing the delay amount.

Note that the present invention is not limited to the above-described exemplary embodiments, and they can be modified as desired without departing from the scope and spirit of the present invention.

Although the present invention has been explained above with reference to exemplary embodiments, the present invention is not limited to the above explanation. Various modifications that can be understood by those skilled in the art can be made to the configurations and the details of the present invention within the scope of the invention.

This application is based upon and claims the benefit of priority from Japanese patent application No. 2010-251488, filed on November 10, 2010, the disclosure of which is incorporated herein in its entirety by reference.

### Reference Signs List

- 1: OPTICAL SIGNAL SOURCE
- 2: OPTICAL WAVEGUIDE
- 3: SIGNAL SOURCE
- 4: VARIABLE DELAY CIRCUIT
- 5: VARIABLE DELAY CIRCUIT
- 6: VARIABLE DELAY CIRCUIT
- 7: VARIABLE DELAY CIRCUIT
- 8: DRIVE CIRCUIT
- 9: DRIVE CIRCUIT
- 10: DRIVE CIRCUIT
- 11: DRIVE CIRCUIT
- 12: DIVISION ELECTRODE
- 13: DIVISION ELECTRODE
- 14: DIVISION ELECTRODE
- 15: DIVISION ELECTRODE
- 16: DELAY CONTROL CIRCUIT
- 17: BRANCH SECTION
- 18: BRANCH SECTION
- 19: BRANCH SECTION
- 21: SHUNT PEAKING INDUCTOR
- 21: SHUNT PEAKING INDUCTOR
- 23: RESISTOR
- 24: RESISTOR
- 25: TRANSISTOR
- 26: TRANSISTOR
- 27: VARIABLE CAPACITOR
- 28: SERIES PEAKING INDUCTOR
- 31: CLOCK SIGNAL SOURCE
- 32: VARIABLE PHASE SHIFTER
- 33: VARIABLE PHASE SHIFTER
- 34: VARIABLE PHASE SHIFTER
- 35: VARIABLE PHASE SHIFTER
- 36: D-FLIP-FLOP CIRCUIT
- 37: D-FLIP-FLOP CIRCUIT
- 38: D-FLIP-FLOP CIRCUIT
- 39: D-FLIP-FLOP CIRCUIT
- 41: WAVEFORM MONITORING CIRCUIT
- 50: MODULATION UNIT
- 60: MODULATION TIMING CONTROL UNIT

## Claims

1. An optical phase modulation circuit comprising:
an optical modulation unit that comprises a plurality of division electrodes connected in tandem and generates a modulation signal by summing up phases of optical signals modulated by using respective division electrodes;
a drive unit that drives the plurality of division electrodes; and
a modulation timing control unit that controls timings at which the optical signals are modulated in the plurality of division electrodes, by controlling an operation timing of the drive unit.

2. The optical phase modulation circuit according to Claim 1, further comprising:
a signal source; and
a branch section that divides a signal output from the signal source into a plurality of branch signals,
wherein the timing control unit controls an operation timing of the plurality of drive units by controlling a timing at which the plurality of branch signals are output to the plurality of drive units.

3. The optical phase modulation circuit according to Claim 1 or 2, wherein the timing control unit comprises:
a delay unit that gives a delay to at least one branch signal among the plurality of branch signals output from the branch section and outputs the delayed branch signal to the drive unit; and
a delay control unit that controls a timing at which the plurality of division electrodes are driven by controlling a delay amount given to the plurality of branch signals.

4. The optical phase modulation circuit according to Claim 3, wherein the delay control unit controls the delay amount so that a delay amount larger than a propagation delay of the optical signal or a delay amount smaller than the propagation delay of the optical signal is given to at least one branch signal among the plurality of branch signals.

5. The optical phase modulation circuit according to any one of Claims 1 to 4, further comprising an inductor that gives an analog peaking characteristic to a drive waveform of a drive signal output from the drive unit to the division electrode.

6. The optical phase modulation circuit according to Claim 3 or 4, wherein
the delay unit comprises:
a phase shifter that changes a phase of a received clock signal; and
a flip-flop circuit that outputs the branch signal to the drive unit according to a timing of a clock signal output from the phase shifter, and
the delay control unit controls a phase change amount of the clock signal in the phase shifter and thereby controls an output timing of a clock signal output from the phase shifter to the flip-flop circuit.

7. The optical phase modulation circuit according to any one of Claims 1 to 6, further comprising a waveform monitoring circuit that monitors a waveform of a modulation signal output from the optical modulation unit,
wherein the timing control unit controls an operation timing of the drive unit so that a rising time or a falling time of the modulation signal output from the waveform monitoring circuit becomes a predetermined time.

8. An optical phase modulation method comprising:
a step of dividing a signal output from a signal source into a plurality of branch signals;
a step of controlling an output timing of at least one branch signal among the plurality of branch signals; and
a step of driving a plurality of division electrodes connected in tandem by using a plurality of branch signals including the branch signal whose output timing is controlled.
